# DEMANDE DE BREVET EUROPEEN

(11) **EP 2 543 781 A1**
(43) Date de publication de la demande: **09.01.2013**
(21) Numéro de dépôt: 12354037.9
(22) Date de dépôt: 14.06.2012
(51) Int. Cl.: E03C 1/298, E03F 5/04, F16K 17/18

(54) **Manchon anti-odeur pour extrémité de tuyau d'évacuation de liquide et installation associée**

(30) Priorité: 06.07.2011 FR 1102129
(71) Demandeur: Norham, 26260 Saint-Donat-sur-l'Herbasse (FR)
(72) Inventeur: Turner, David, 26260 Marsaz (FR); Michel, François, 26260 Saint Donat (FR); Lamberton, Mikaël, 26260 Arthemonay (FR); Pally, Sébastien, 26100 Romans (FR)
(74) Mandataire: Hecké, Gérard

(57) **Abrégé**

Le manchon anti-odeur pour extrémité de tuyau d'évacuation de liquide comprend une membrane (1) déformable munie d'un clapet (2) et d'une ouïe (3), chacun étant configuré pour qu'une pression du liquide exercée sur une première face (4a) de la membrane (1) permette l'ouverture de l'ouïe (3) tout en conservant le clapet (2) en position fermée. Le clapet (2) est conformé pour s'ouvrir sous l'action d'une pression du liquide exercée sur une seconde face (4b) de la membrane (1) opposée à la première face (4a).

## Description

### Domaine technique de l'invention

L'invention est relative à un manchon anti-odeur pour extrémité de tuyau d'évacuation de liquide.

### État de la technique

Dans le domaine des évacuations des eaux pluviales, il existe des installations munies d'un bac de récupération de l'eau de pluie. Un tuyau coudé est disposé dans le bac de récupération, et comprend une extrémité libre orientée vers le fond du bac de récupération et une autre extrémité reliée à un système d'évacuation. Une telle orientation du tuyau coudé permet en fait de former un siphon avec le bac, lorsque le niveau de l'eau dans le bac de récupération est au-dessus du niveau du coude, l'eau de pluie remonte dans le tuyau, passe le coude, puis est évacuée par le système d'évacuation. Un exemple d'installation telle que présentée dans ce qui précède est proposé dans la demande de brevet français FR 2 689 154 et possède les caractéristiques du préambule de la revendication 11 annexée.

Tant que le niveau de l'eau de pluie reste compris entre le coude et l'extrémité libre du tuyau coudé, le siphon est actif c'est-à-dire que les odeurs du système d'évacuation ne sont pas propagées car bloquées par l'eau de pluie restante dans le bac de récupération. Cependant, lors des périodes chaudes de l'année, l'eau restante s'évapore peu à peu, et son niveau fini par passer en dessous de l'extrémité libre du tuyau coudé. Lorsque l'extrémité libre du tuyau coudé n'est plus immergée, rien n'arrête les odeurs qui remontent alors du système d'évacuation et se propagent en dehors du bac de récupération.

Par ailleurs, le document de brevet DE 2 341 457 propose un raccord pouvant équiper une fontaine et possédant les caractéristiques du préambule de la revendication 1 annexée. Dans ce raccord, il est prévu un clapet qui se place en position fermée en l'absence d'écoulement d'eau à travers le raccord.

### Objet de l'invention

L'objet de l'invention consiste à réaliser un manchon anti-odeur apte à être manchonné en extrémité de tube permettant d'éviter les déconvenues de l'art antérieur et ne se dégradant pas lors de son fonctionnement.

On tend vers cet objet en ce que le manchon comprend une membrane déformable munie d'un clapet et d'une ouïe, chacun étant configuré pour qu'une pression du liquide exercée sur une première face de la membrane permette l'ouverture de l'ouïe tout en conservant le clapet en position fermée, le clapet étant conformé pour s'ouvrir sous l'action d'une pression du liquide exercée sur une seconde face de la membrane opposée à la première face.

Avantageusement, la membrane définit des première et seconde zones disposées respectivement de part et d'autre de la membrane, le clapet étant conformé pour s'ouvrir par déformation de la membrane en direction de la première zone, et l'ouïe étant configurée pour s'ouvrir en direction de la seconde zone par déformation de la membrane.

L'invention est aussi relative à une installation d'évacuation de liquide mettant en oeuvre le manchon. L'installation comporte un bac de récupération de liquide, un tuyau coudé disposé dans le bac de récupération comprenant une extrémité libre orientée vers le fond du bac de récupération et une autre extrémité reliée à un système d'évacuation, et ledit manchon anti-odeur est monté à l'extrémité libre du tuyau coudé avec la première face de la membrane orientée vers l'intérieur dudit tuyau coudé.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre une vue en trois dimensions d'un manchon anti-odeur dont l'ouïe et le clapet sont en position fermée,
La figure 2 illustre une vue en trois dimensions d'un manchon anti-odeur dont l'ouïe est en position fermée et le clapet est en position ouverte,
La figure 3 illustre une vue de la figure 1 orientée vers une première face de la membrane du manchon,
La figure 4 illustre une vue de la figure 1 orientée vers une seconde face de la membrane du manchon,
La figure 5 illustre une vue en coupe selon A-A de la figure 3,
La figure 6 illustre une coupe verticale d'un bac de récupération pour illustrer les éléments disposés en son intérieur,
La figure 7 illustre une coupe verticale d'un bac de récupération centrée sur le tuyau coudé, le clapet étant en position ouverte,
La figure 8 illustre la même coupe que la figure 7 à la différence que le niveau de liquide dans le bac est plus bas et que le clapet est en position fermée.

### Description de modes préférentiels de réalisation

L'utilisation d'un manchon anti-odeur permet de limiter la remontée de l'air vicié des égouts et des canalisations notamment lorsque la fonction de siphon n'est plus assurée par la présence de liquide dans un bac de récupération muni d'un tuyau coudé. Le manchon tel que décrit ci-dessous est conformé pour être monté en extrémité de tuyau d'évacuation de liquide. Par « évacuation » on entend que le manchon peut être traversé par le liquide de sorte que ce dernier soit transvasé dans un tuyau permettant son déplacement pour être évacué, par exemple en direction d'une centrale de traitement de liquide usé.

Dans la présente description, la notion de siphon est entendue comme une fonction permettant d'une part l'évacuation de liquide usé et d'autre part évitant la remontée d'air vicié des égouts et/ou canalisations, c'est-à-dire dans l'exemple décrit ci-dessous d'un système d'évacuation.

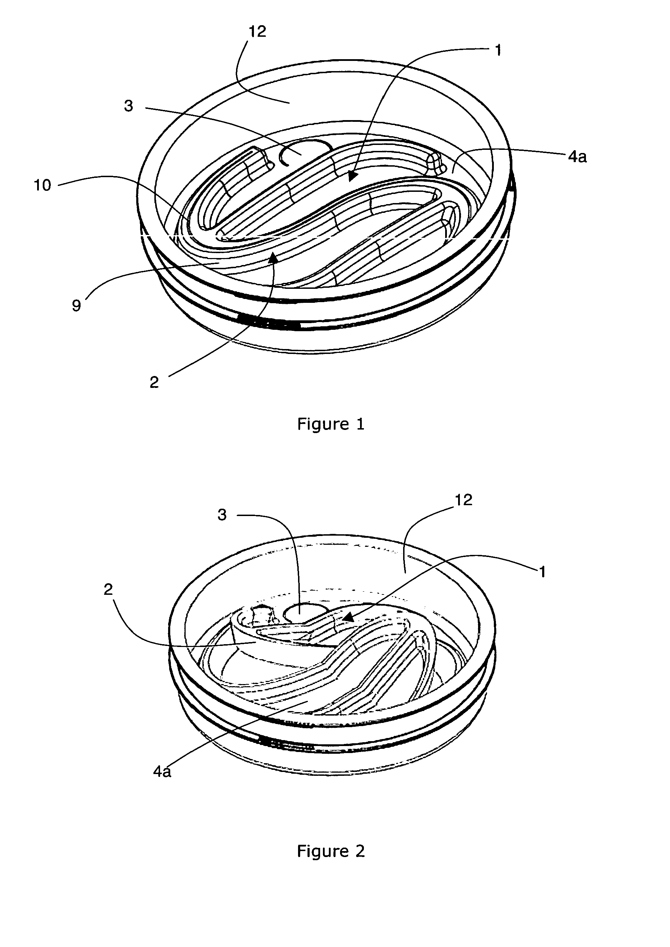

Pour cela il a été développé, comme illustré aux figures 1 à 5, un manchon anti-odeur pour extrémité de tuyau d'évacuation de liquide. Le manchon est conformé pour être manchonné à une extrémité de tuyau, préférentiellement de section circulaire. Un tel manchon comprend une membrane 1 déformable munie d'un clapet 2 et d'une ouïe 3, chacun étant configuré pour s'ouvrir par application d'une pression sur ladite membrane 1. La pression nécessaire à l'ouverture de l'ouïe 3, exercée sur une première face 4a de la membrane, est inférieure à la pression nécessaire à l'ouverture du clapet 2 sur ladite première face 4a de la membrane 1. Autrement dit, l'ouïe 3 et le clapet 2 sont configurés pour qu'une pression du liquide exercée sur la première face 4a de la membrane 1 permette l'ouverture de l'ouïe 3 tout en conservant le clapet 2 en position fermée. Le clapet 2 est conformé pour s'ouvrir selon une pression appliquée sur une seconde face 4b de la membrane 1 opposée à la première face 4a. Ceci permet avantageusement de prévoir des chemins d'écoulement opposés d'un liquide, évitant de dégrader la membrane déformable. En effet, l'utilisation d'un unique clapet risquerait d'abîmer la membrane à force de se déformer selon deux sens opposés au niveau du clapet, un autre risque étant de bloquer le clapet unique dans une position d'ouverture selon l'un des sens d'écoulement du liquide.

La membrane 1 est préférentiellement formée dans un même matériau, par exemple du caoutchouc ou un élastomère. Le matériau choisi sera avantageusement en accord avec les normes NF EN 681-1 ou NF EN 681-2. Ce matériau est avantageusement souple pour permettre la déformation de la membrane pour ouvrir le clapet 2 et/ou l'ouïe 3 lorsqu'un liquide vient en contact avec ladite membrane 1, et exerce sur la membrane 1 une pression. Par la même occasion, le matériau de la membrane 1 est choisi pour revenir à sa position initiale lorsque aucune pression n'est exercée sur la membrane 1. Autrement dit, de manière générale, la membrane 1 est élastiquement déformable, sa position initiale correspondant aux positions fermées de l'ouïe 3 et du clapet 2. L'utilisation d'un unique matériau permet de limiter les coûts de fabrication du manchon, notamment en utilisant un unique moule. Ainsi, le manchon est préférentiellement une pièce monobloc.

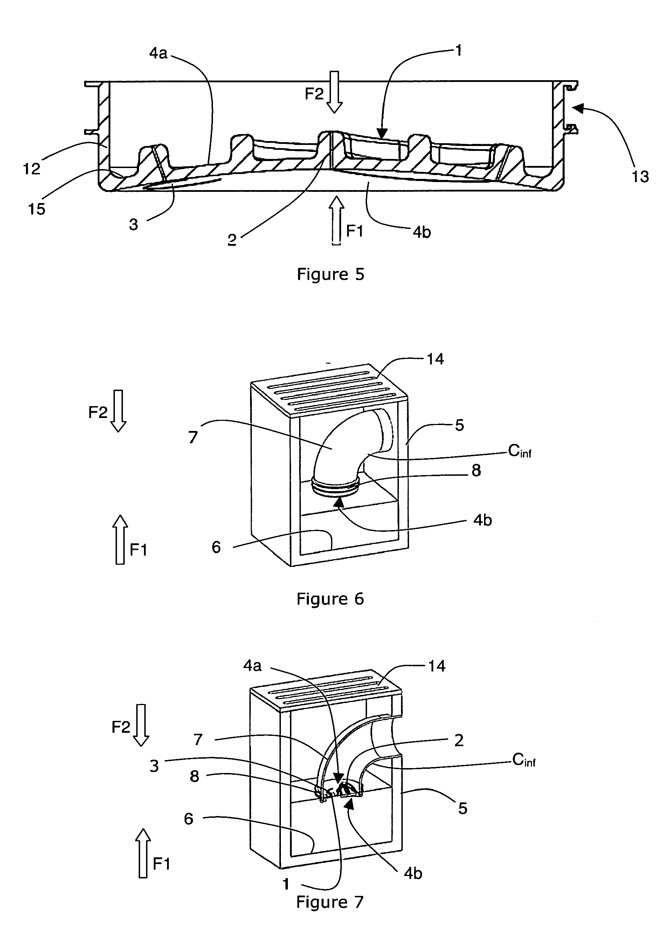

Comme indiqué ci-dessus, un liquide peut traverser la membrane 1 selon deux sens d'écoulement. Dans le premier sens découlement (flèche F1 à la figure 5) le liquide exerce une pression sur la seconde face 4b de la membrane 1 et dans le second sens d'écoulement (flèche F2 à la figure 5), le liquide exerce une pression sur la première face 4a de la membrane 1. La position ouverte du clapet 2 correspond à une déformation de la membrane 1 par une élévation d'au moins une partie de la membrane 1 par rapport à la première face 4a, c'est-à-dire dans le sens F1 de la première direction d'écoulement. La position ouverte de l'ouïe 3 correspond à une déformation de la membrane 1 par une élévation d'au moins une partie de la membrane 1 par rapport à la seconde face 4b, c'est-à-dire dans le sens F2 de la seconde direction d'écoulement. Autrement dit, on peut considérer que la membrane 1 définit en fait des première et seconde zones disposées respectivement de part et d'autre de la membrane 1, ie clapet 2 étant conformé pour s'ouvrir, préférentiellement uniquement, par déformation de la membrane 1 en direction de la première zone, et l'ouïe 3 étant conformée pour s'ouvrir en direction de la seconde zone par déformation de la membrane 1. Dans l'exemple, la première zone est proximale de la première face 4a de la membrane 1, et la seconde zone est proximale de la seconde face 4b de la membrane. Préférentiellement l'ouïe 3 est conformée pour s'ouvrir uniquement en direction de la seconde zone.

En fait, le manchon anti-odeur décrit ci-dessus est destiné à être utilisé dans une installation d'évacuation de liquide typiquement d'eau de pluie ou de nettoyage des rues.

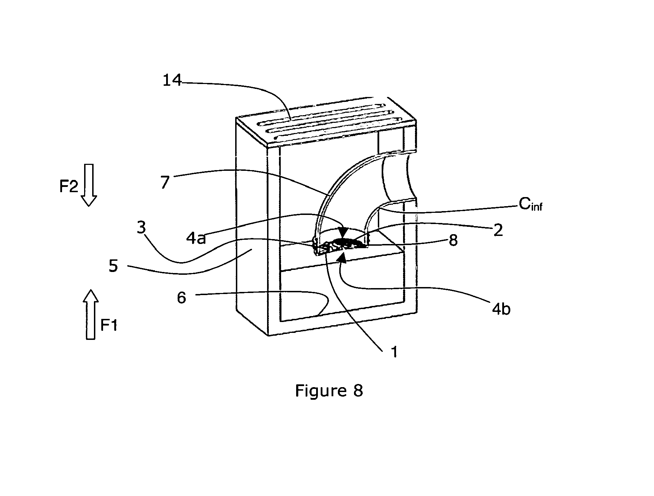

Comme illustré aux figures 6 à 8, une telle installation comporte un bac de récupération 5 de liquide. Un tuyau coudé 7 est disposé dans le bac de récupération 5. Ce tuyau coudé 7 comprend une extrémité libre orientée vers le fond 6 du bac de récupération 5 et une autre extrémité reliée à un système d'évacuation (non représenté). Typiquement le système d'évacuation comporte un réseau de tuyaux dans lequel le liquide est apte à s'écouler. Le manchon 8 anti-odeur est monté à l'extrémité libre du tuyau coudé 7 avec sa première face 4a orientée vers l'intérieur dudit tuyau coudé 7.

Une fois mis en place en bout du tuyau coudé 7, le manchon 8 décrit ci-dessus peut, selon les situations, être traversé au niveau de sa membrane par un liquide selon deux sens d'écoulement opposés. Principalement, on dira que la première direction d'écoulement (orientée selon la flèche F1) permet au fluide de traverser la membrane 1 par le clapet 2 grâce à la pression exercée par ledit fluide sur la seconde face 4b de la membrane 1, opposée à la première face 4a, et en regard avec le fond 6 du bac de récupération 5 dans l'exemple. Sur la seconde face 4b, la pression du liquide exercée via la montée du liquide dans le bac de récupération 5 est suffisante pour déformer ia membrane 1 de sorte à ouvrir ie clapet 2 (figure 7).

Généralement, on dira que le clapet 2 est ouvert lorsque le niveau du liquide passe au-dessus du niveau de la membrane 1 par rapport au fond 6 du bac de récupération 5. Dans ce cas illustré à la figure 7, le tuyau coudé 7 joue bien le rôle, avec le liquide et le bac de récupération 5, de siphon empêchant la remontée de tout air vicié. Lorsque le niveau du liquide dans le bac 5 dépasse le niveau inférieur C_{inf} du coude du tuyau coudé 7, le liquide peut être évacué.

Le clapet 2 est dans une position ouverte lorsque le niveau du liquide monte (direction selon F1) dans le bac de récupération 5 et atteint, voir dépasse le niveau du manchon 8, et dans une position fermée lorsque le niveau du liquide dans le bac de récupération 5 est inférieur au niveau du manchon (c'est-à-dire compris entre la seconde face 4b de la membrane et le fond 6 du bac de récupération 5). L'ouïe 3 est conformée pour occuper une position ouverte lorsque le niveau du liquide est compris entre le manchon 8 et C_{inf} et que le niveau de liquide baisse dans le bac de récupération (Direction selon F2), et une position fermée lorsque le manchon 8 est au-dessus du niveau du liquide du bac de récupération 5.

Le tableau ci-dessous récapitule les différentes positions du clapet 2 et de l'ouïe 3 en fonction du niveau du liquide. Dans le cas n°1 le niveau de liquide est inférieur au manchon 8, dans le cas n°2 le niveau de liquide est situé entre le manchon 8 et le niveau C_{inf} du tuyau coudé, et dans le cas n°3 le niveau de liquide est supérieur au niveau de C_{inf} . Les états « ouvert » et « fermé » représentent les états du clapet et de l'ouïe.

| Direction d'écoulement | Niveau du liquide dans le bac de récupération | | | | | |
|---|---|---|---|---|---|---|
| | Cas n°1 | | Cas n°2 | | Cas n°3 | |
| | Clapet | Ouïe | Clapet | Ouïe | Clapet | Ouïe |
| F1 | Fermé | Fermé | Ouvert | Fermé | Ouvert | Fermé |
| F2 | Fermé | Fermé | Fermé | Ouvert | Fermé | Ouvert |
| Stable | Fermé | Fermé | Fermé | Fermé | Fermé | Fermé |

Les directions d'écoulement représentent le sens selon les flèches F1 et F2. Dans le cas de la flèche F1, le niveau de liquide monte dans le bac de récupération 5, et dans le cas de la flèche F2 le niveau de liquide descend. Le cas stable correspond à une situation dans laquelle le niveau de liquide dans le bac de récupération 5 n'évolue pas et reste constant.

Dès lors, si le niveau du liquide est inférieur au manchon 8, la membrane 1 est considérée comme fermée, préférentiellement de manière totalement étanche pour éviter le passage d'air vicié.

En fait, l'ouïe 3 et le clapet 2 servent à éviter une dégradation de la membrane 1 en favorisant les échanges selon les deux sens d'écoulement par déformations différentes de la membrane.

Avantageusement, le clapet 2 et l'ouïe 3 sont formés respectivement par une fente pratiquée dans la membrane 1. En fait, ces fentes peuvent être obtenues par ouverture de la membrane 1 selon une découpe pratiquée dans la membrane 1, ou par la forme d'un moule de fabrication du manchon qui permet de délimiter les fentes/ouvertures.

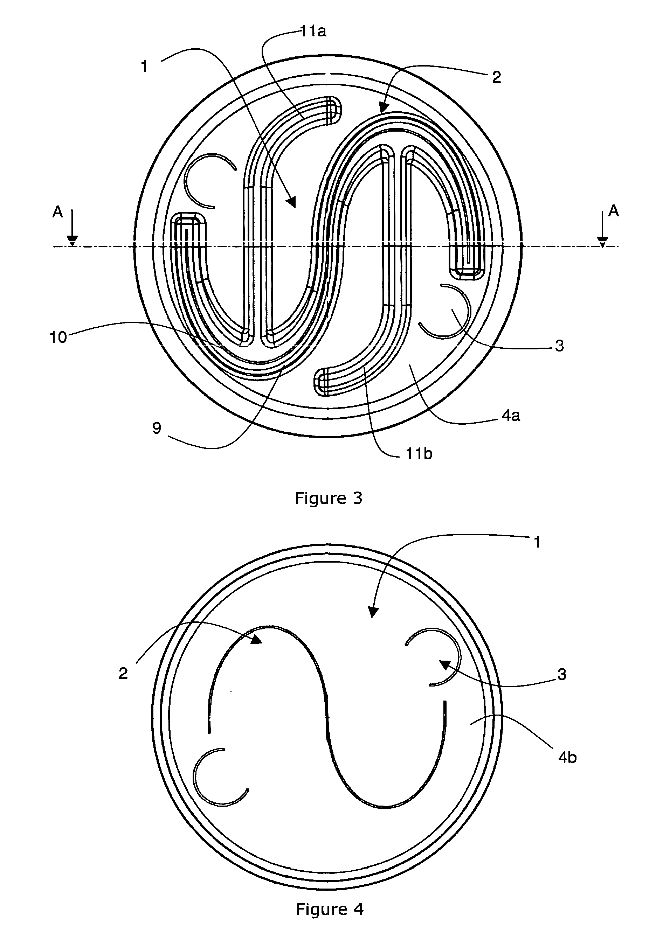

Comme visible aux figures 1 et 3, selon un mode de réalisation, la première face 4a de la membrane 1 comporte une saillie 9 munie d'une fente 10 traversant la membrane 1 pour former le clapet 2. En fait, la fente 10 est délimitée par deux parois de la membrane 1 se rapprochant pour fermer le clapet 2 comme sur la figure 1, et s'éloignant pour ouvrir ie clapet 2 comme sur la figure 2. Préférentiellement, en position fermée du clapet 2, les deux parois de la fente 10 sont au moins partiellement en contact.

La saillie 9 a préférentiellement une forme de S, ou de S inversé, s'élevant de la première face 4a. Ainsi, lorsque le clapet 2 est en position ouverte le flux de liquide pouvant le traverser est plus important. Préférentiellement, le clapet 2 est agencé de sorte à diviser la membrane 1 en deux parties comme illustré à la figure 3 où les deux parties de la membrane 1 sont respectivement définies de part et d'autre de la fente 10. En fonction des applications, d'autres formes possibles de saillie seront envisageables.

La fente 10 est, de préférence, ménagée en biais dans la membrane 1. Ceci permet notamment d'augmenter les surfaces de contact entre les parois de la fente 10 de sorte à limiter encore plus le passage de l'air vicié lorsque le clapet 2 est en position fermée. En effet, si dans l'idéal la fermeture étanche est préférée, il est possible de limiter la circulation de l'air vicié en obturant le plus possible l'extrémité du tuyau sur lequel est manchonné le manchon anti-odeur, l'ouverture en biais permet cette fonction.

Avantageusement, la membrane 1 a une forme de cercle, et la saillie 9 en forme de S, ou de S inversé, a un centre de symétrie correspondant au centre du cercle définissant la membrane 1. La saillie 9 s'étend sensiblement sur le diamètre de la membrane 1. Les deux extrémités libres du S, ou du S inversé, se retrouvent alors au niveau de la bordure périphérique de la membrane 1.

Sur la figure 3, selon une variante applicable à la membrane 1 comportant la saillie 9, la membrane 1 comporte en outre au moins un élément 11a,11b pour rigidifier le clapet 2. Dans l'exemple particulier de la saillie 9 en forme de S ou S inversé, la membrane comporte avantageusement deux éléments 11 a, 11 b de rigidification. En fait, ces éléments 11a, 11b ont pour but de favoriser le retour à la position fermée du clapet 2 lorsque aucune pression n'est appliquée sur la membrane 1 au niveau de la seconde face 4b. Ces éléments 11a, 11b peuvent être formés chacun par une protubérance s'élevant de la première face 4a et comportant une extrémité reliée à la saillie 9 et une extrémité libre. Au niveau de son extrémité libre, un élément 11 a, 11 b décrit préférentiellement un arc de cercle, cet arc de cercle étant relié par une portion rectiligne de l'élément 11 a, 11 b à la saillie 9. L'arc de cercle au niveau de l'élément de rigidification permet de donner plus de ressort au clapet pour favoriser son retour à la position fermée.

Sur l'exemple particulier de la figure 3, chaque élément 11 a, 11 b est respectivement relié à la saillie 9 au niveau d'un pan concave associé de la saillie 9. En fait, un pan concave est délimité par un creux dans le profil du S, ou du S inversé, qui contient en fait deux creux opposés. Préférentiellement, la liaison entre la saillie 9 et une protubérance 11 a, 11 b est réalisée au niveau du fond du creux associé.

Afin d'améliorer la tenue du manchon sur le tuyau qui lui sera associé, le manchon, dans ses différentes variantes, peut comporter, comme illustré aux figures 1, 2 et 5, un anneau 12 s'étendant autour de la membrane 1 et s'élevant à partir de la première face 4a, ledit anneau 12 comportant à sa périphérie extérieure une gorge 13 de réception d'un élément de serrage. Ainsi, le manchon pourra être monté à une extrémité d'un tube ou tuyau, l'anneau 12 entourant alors cette extrémité. Le tuyau peut avoir un diamètre extérieur sensiblement égal au diamètre intérieur de l'anneau 12. Avantageusement le manchon étant souple, il a une plage d'utilisation permettant son adaptation à plusieurs diamètres de tuyau, en fait c'est la gorge 13 en combinaison avec un élément de serrage qui permettra l'adaptation. Préférentiellement, le manchon comporte sur la première face 4a une rainure annulaire 15 (figure 5) disposée à l'interface entre l'anneau 12 et la membrane 1. La rainure annulaire 15 est en partie délimitée par la membrane 1 et par l'anneau 12. Cette rainure annulaire 15 est dimensionnée pour que son fond forme une butée d'engagement du tuyau associé. La largeur de la rainure est strictement supérieure à l'épaisseur de la paroi du tuyau pour éviter de compromettre le bon fonctionnement du clapet et de l'ouïe.

Comme indiqué précédemment, le manchon peut être obtenu par moulage et former une pièce monobloc. Dès lors, le cas échéant la saillie 9, les éléments 11 a, 11 b, l'anneau 12 sont monoblocs.

Avantageusement, comme illustré à la figure 5, la seconde face 4b de la membrane 1, opposée à la première face 4a, est concave. En fait, cette surface concave de la seconde face 4b permet d'une part de favoriser l'ouverture du clapet 2 lorsqu'une pression d'un liquide selon le premier sens découlement du liquide (flèche F1) est appliquée, et d'autre part d'augmenter la résistance du clapet 2, lorsqu'une pression d'un liquide selon le second sens d'écoulement (flèche F2) est appliquée contre la première face 4a, pour éviter son ouverture.

Selon une mise en oeuvre particulière, l'ouïe 3 est en forme de fer à cheval traversant la membrane. Autrement dit, la fente pratiquée dans la membrane pour délimiter l'ouïe 3 a cette forme de fer à cheval, les deux extrémités libres de ladite fente étant proximale pour limiter les forces nécessaires à l'ouverture de l'ouïe 3 notamment selon le second sens d'écoulement tout en conservant le clapet 2 fermé. Préférentiellement, la fente associée à l'ouïe 3 sera réalisée en biais, et agencée pour avoir une forme générale divergente de la première face 4a vers la seconde face 4b de membrane 1. Cette forme divergente permet notamment de limiter l'ouverture de l'ouïe 3 uniquement selon la seconde direction d'écoulement, c'est-à-dire en direction de la seconde zone telle que définie ci-dessus. Cette forme en biais permet les mêmes avantages que la forme en biais du clapet décrite ci-dessus. Le cas échéant, la forme concave de la seconde face 4b favorise le retour en position fermée de l'ouïe 3 lorsque aucun fluide ne s'écoule selon le sens F2.

Comme illustré aux figures 6 à 8, le bac de récupération 5 comporte préférentiellement une grille 14 munie d'ouvertures disposée sur le bac de récupération 5 en opposition à son fond 6. Le bac de récupération 5 étant destiné à être enterré, la grille 14 sera à affleurement du sol et permettra le passage de liquide dans le bac 5 tout en permettant à des personnes de marcher sur la grille 14.

Préférentiellement, la membrane 1 comporte deux ouïes 3 comme visible aux figures 3 et 4. Avantageusement, ces ouïes sont disposées de part et d'autre de la fente 10 formant clapet 2 de sorte à homogénéiser les forces appliquées à la membrane 1 lorsque le liquide est en pression contre la première face 4a.

Sur les figures 6 à 8, une bande de serrage coopérant avec la gorge 13 de la figure 5 permet d'assurer le maintien en position du manchon 8.

Avantageusement le clapet et l'ouïe sont aptes à s'ouvrir uniquement sous la pression exercée par un liquide ruisselant en fonction du sens d'écoulement.

## Revendications

1. Manchon anti-odeur à monter à une extrémité de tuyau d'évacuation de liquide, comprenant un clapet (2), **caractérisé en ce qu'**il comprend une membrane (1) déformable munie du clapet (2) et d'une ouïe (3), chacun étant configuré pour qu'une pression du liquide exercée sur une première face (4a) de la membrane (1) permette l'ouverture de l'ouïe (3) tout en conservant le clapet (2) en position fermée, ie clapet (2) étant conformé pour s'ouvrir sous l'action d'une pression du liquide exercée sur une seconde face (4b) de la membrane (1) opposée à la première face (4a).

2. Manchon selon la revendication 1 **caractérisé en ce que** la membrane (1) définit des première et seconde zones disposées respectivement de part et d'autre de la membrane (1), le clapet (2) étant conformé pour s'ouvrir par déformation de la membrane (1) en direction de la première zone, et l'ouïe (3) étant configurée pour s'ouvrir en direction de la seconde zone par déformation de la membrane (1).

3. Manchon selon l'une des revendications 1 ou 2, **caractérisé en ce que** la première face (4a) de la membrane (1) comporte une saillie (9) munie d'une fente (10) traversant la membrane (1) pour former le clapet (2).

4. Manchon selon la revendication 3, **caractérisé en ce que** la saillie (9) a une forme de S ou de S inversé.

5. Manchon selon l'une quelconque des revendications précédentes, **caractérisé en ce que** ledit clapet (2) comporte une fente (10) qui traverse la membrane (1), deux parois se rapprochant pour fermer ledit clapet (2) et s'éloignant pour ouvrir ledit clapet (2) délimitant cette fente (10) qui a une forme de S.

6. Manchon selon l'une quelconque des revendications 3 à 5, **caractérisé en ce que** la fente (10) est ménagée en biais.

7. Manchon selon la revendication 3 **caractérisé en ce que** la membrane (1) comporte deux éléments (11 a, 11 b) pour rigidifier le clapet (2).

8. Manchon selon l'une quelconque des revendications précédentes, **caractérisé en ce qu'**il comporte un anneau (12) s'étendant autour de la membrane (1) et s'élevant à partir de sa première face (4a), ledit anneau (12) comportant à sa périphérie extérieure une gorge (13) de réception d'un élément de serrage.

9. Manchon selon l'une quelconque des revendications précédentes **caractérisé en ce que** la seconde face (4b) de la membrane (1) est concave.

10. Manchon selon l'une quelconque des revendications précédentes, **caractérisé en ce que** l'ouïe (3) est en forme de fer à cheval traversant la membrane (1).

11. Installation d'évacuation de liquide, comportant :
- un bac de récupération (5) du liquide,
- un tuyau coudé (7) disposé dans le bac de récupération (5) comprenant une extrémité libre orientée vers le fond (6) du bac de récupération (5) et une autre extrémité reliée à un système d'évacuation,
**caractérisé en ce qu'**un manchon anti-odeur (8) selon l'une quelconque des revendications précédentes est monté à l'extrémité libre du tuyau coudé (7) avec la première face (4a) de la membrane (1) orientée vers l'intérieur dudit tuyau coudé (7).
